# EUROPEAN PATENT APPLICATION

(11) **EP 4 527 552 A1**
(43) Date of publication of application: **26.03.2025**
(21) Application number: 23460039.3
(22) Date of filing: 28.11.2023
(51) Int. Cl.: B24B 27/033, E04B 1/24

(54) **METHOD OF OBTAINING CONTACT BEARING SURFACES IN FRICTION GRIP CONNECTION OF STEEL SUPPORTING STRUCTURES**

(30) Priority: 22.09.2023 PL 44620823
(71) Applicant: FORTECH Spolka Cywilna G. Ceglarz, M. Kabata, R. Zbik, 46-310 Gorzow Slaski (PL)
(72) Inventor: Grabowski, Eugeniusz, 50-334 Wroclaw (PL)

(57) **Abstract**

The object of the invention is a method for obtaining contact bearing surfaces in friction screw joints of steel supporting structures, in particular end beams or supports with girders of light bridge or gantry cranes.

The method consists in placing machining spacer rings (3) kinematically coupled with a drive cable (7) between the raw surfaces of metal elements (1, 2), connected by pre-tension screw assemblies (4), and the machining distance rings ( 3) the preload screws (4) are placed individually on each screw pin of the assembly, and then the drive wheel (8) forces the simultaneous rotation of all the machining distance rings (3), whose front working surfaces machine the raw surfaces of the joined metal elements by cutting or sawing (1, 2), moreover, the constant pressure of the spacer machining rings (3) is controlled by a gravitational lever system or easily removable spring elements.

## Description

The subject of the invention is a method for obtaining contact bearing surfaces in friction screw joints of steel supporting structures, in particular end beams or supports with girders of light bridge or gantry cranes.

Overhead traveling crane with upper girders at the edge of the bridge girder, known from US patent No. US4385562A, has contact bearing surfaces between the spacer sleeves/rings and the flanges of the girders and end plates of the crane girders, are obtained as a result of local machining by milling cylindrical recesses for these sleeves/rings , in one technological installation, which requires the use of expensive multi-tool special machining heads, which is profitable only in large-scale production.

A way of obtaining Friction grip connections, in particular of steel support structures and friction screw joints, especially of steel support structures, is known from Polish patent no. PL238010, in which the contact bearing surfaces are obtained by local cutting/sawing of the raw surfaces of the flanges of the crane girders and the end plates of the crane girders through the working surfaces of spacer machining rings, which are individually manually rotated by means of a catch key inserted into notches located on the periphery of these rings. This method of achieving the aforementioned load-bearing contact surfaces - which requires repeated partial rotation of all these rings (in individual screw-friction joint assemblies) in order to ensure their successive penetration into the locally machined/sawn material of the crane girder flanges - is very labour-intensive and particularly cumbersome, especially when there are more than 4 friction screw assemblies in a given crane girder connection.

The essence of the method according to the invention is that between the raw surfaces of metal elements connected by preload screw assemblies, machining spacer rings kinematically coupled with a drive cable are placed, and the machining distance rings are placed individually on each screw pin of the preload screw assembly , then the drive wheel forces the simultaneous rotation of all the machining distance rings, whose front working surfaces process the raw surfaces of the joined metal elements by cutting or sawing. What is more , the constant pressure of the spacer machining rings is controlled by a gravity lever system or easily removable spring elements.

Favourably , the angle of wrapping by the driving cable of each of the machining rings and the drive wheel is adjusted by the steering wheels, while the tension force of the cable is regulated by the tension wheel or weights.

Preferably, the machining spacer rings kinematically coupled with a drive cable are rotated with a closed-circuit disconnectable drive cable.

Favourably , the machining spacer rings kinematically coupled with a drive cable are rotated with a drive cable with two tensioned ends.

Advantageously, the machining spacer ring has a shaped surface on its circumference, the profile of which cooperates with the profile formed on the working surface of the drive cable and the drive wheel.

Advantageously, the machining spacer ring has a shaped surface on its circumference, the outline of which cooperates with the outline formed on the working surface of the drive cable and the drive wheel.

The method according to the invention allows for a multiple reduction in the labour intensity of obtaining contact bearing surfaces in friction screw joints of steel supporting structures, in particular end beams or supports with girders of light bridge or gantry cranes containing spacer processing rings. The reduction in this labour consumption is at least proportional to the number of friction screw joints in each screw connection node of individual components of a given steel load-bearing structure. Moreover, simultaneous local machining of the raw surfaces of the joined parts in their given screw connection node allows for better control of changes in the relative position of these parts as all the machining spacer rings progressively sink into the material of these joined parts.

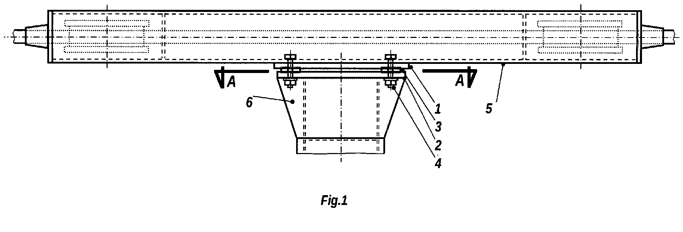

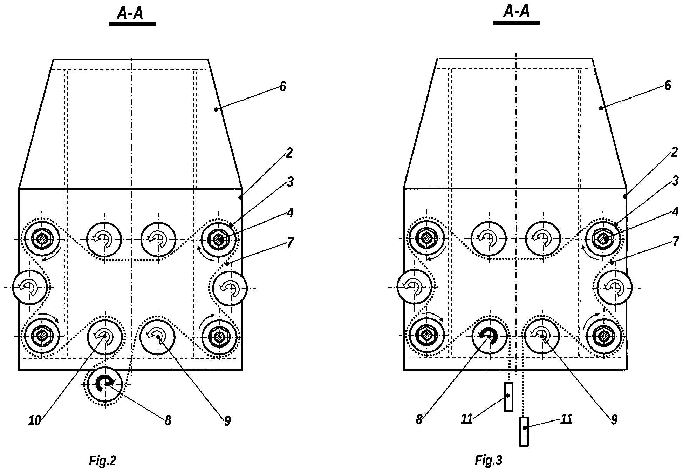

The subject of the invention in an embodiment is shown in the drawing, in which Fig. 1 shows a top view of the end-gear with a fragment of a bridge crane girder connected to it, Fig. 2 - cross-section A-A through the Friction grip connections of the end-gear with the girder, containing spacer rings machining the belted detachable drive cable with a closed circuit, Fig. 3 - cross-section A-A through the friction screw joints of the headstock with the girder, containing spacer machining rings belted with the drive cable with both ends tensioned with weights.

### Example 1

The manner of obtaining contact bearing surfaces in friction bolted joints, especially of steel support structures, is based on the fact that between the raw surfaces of the metal elements 1, 2, joined by preloaded bolt assemblies 4, there are placed, spacer machining rings 3 coupled kinematically by a drive link 7, whereby the spacer machining rings 3 are individually applied to each bolt shank of the preloaded bolt assembly 4, after which the drive wheel 8 forces the simultaneous rotation of all distance machining rings 3, the front working surfaces of which machine by machining or sawing the raw surfaces of the metal parts to be joined 1, 2, furthermore the constant pressure of the distance machining rings 3 is controlled by a gravitational lever system or by easily removable spring elements. The angle of wrapping by the drive cable 7 of each of the machining rings 3 and the drive wheel 8 is adjusted by the steering wheels 6 and 9, while the tension force of the cable 7 is regulated by the tension wheel 10 or weights 11. The spacer processing rings 3, kinematically coupled with the drive cable 7, are rotated by the drive cable 7 cable with both ends taut. Moreover, the machining spacer ring 3 has a shaped surface on its circumference, the outline of which cooperates with the outline formed on the working surface of the drive cable 7 and the drive whee 8.

### Example 2

The way of obtaining contact bearing surfaces in friction screw joints, especially steel supporting structures, is as in the first example, with the difference that the machining distance rings 3, kinematically coupled with the drive cable 7, are rotated by a detachable closed-circuit driving cable 7 and the distance machining ring 3 is on the circumference a shaped surface whose profile cooperates with the profile formed on the working surface of the drive cable 7 and the drive wheel 8.

The kinematic coupling of the spacer processing rings 3 is achieved by wrapping part of their circumferences with a driving cable 7, which can be detachable with a closed circuit, such as a pin chain, or with two ends tensioned, for example, with tension weights 11i, which driving cable 7 is connected to these processing rings 3 shape-coupled, e.g. a pin chain, a toothed belt with appropriate teeth on the circumference of the machining rings 3, or friction-coupled, e.g. a V-belt in a V-groove on the circumference of the machining rings 3, where the angle of wrap of these machining rings 3 is adjusted by the steering wheels located next to them 9.

### List of symbols in the drawing:

1. crane top girder flange,
2. crane girder flange,
3. spacer machining ring,
4. preload screw assembly,
5. crane top girder,
6. crane girder,
7. drive cable,
8. drive wheel,
9. steering wheel,
10. tension wheel,
11. tension weights.

## Claims

1. A way of obtaining contact bearing surfaces in friction screw joints, in particular steel bearing structures, consisting in local machining with spacer machining rings (3) of the surfaces of two flat metal elements connected with preload screws, **characterized in that** between the raw surfaces of the metal elements ( 1, 2), joined by the preload screw assemblies (4), machining spacer rings (3) kinematically coupled with the drive link (7) are placed, and the machining distance rings (3) are placed individually on each screw pin of the screw assembly with preload (4), then the drive wheel (8) forces the simultaneous rotation of all machining distance rings (3), whose front working surfaces process the raw surfaces of the joined metal elements (1, 2) by cutting or sawing, and also a constant pressure of the machining distance rings (3) controlled by a gravity lever system or easily removable spring elements.

2. The method in accordance with the claim 1, significant in that the angle of wrapping by the drive cable (7) of each of the machining rings (3) and the drive wheel (8) is adjusted by the steering wheels (9), while the tension force of the cable (7) is adjusted by the tension wheel (10). or weights (11).

3. The method in accordance with the claim 1, significant in that the machining spacer rings (3) kinematically coupled with a drive cable (7) are rotated by a detachable, closed-circuit drive cable (7).

4. The method in accordance with the claim 1, significant in that the machining spacer rings (3) kinematically coupled with the drive cable (7) are rotated by the drive cable (7) using a cable with both ends under tension.

5. The method in accordance with the claim 1. 1, significant in that the machining spacer ring (3) has a shaped surface on its circumference, the profile of which cooperates with the profile formed on the working surface of the drive cable (7) and the drive wheel (8).

6. The method in accordance with the claim 1. 1, significant in that the machining spacer ring (3) has a shaped surface on its circumference, the outline of which cooperates with the outline formed on the working surface of the drive cable (7) and the drive wheel (8).
